# EUROPEAN PATENT SPECIFICATION

(11) **EP 1 140 379 B1**
(45) Date of publication and mention of the grant of the patent: **02.06.2004**
(21) Application number: 00901723.7
(22) Date of filing: 11.01.2000
(51) Int. Cl.: B07B 1/46, B01D 33/03

(54) **SCREEN ASSEMBLY FOR USE IN A VIBRATORY SHAKER**
SIEBBELAG FÜR SCHWINGSIEB
ENSEMBLE TAMIS POUR CRIBLE A SECOUSSES

(30) Priority: 11.01.1999 US 228572
(43) Date of publication of application: 10.10.2001
(73) Proprietor: Varco I/P, Inc., Houston, TX 77051 (US)
(72) Inventor: ADAMS, Thomas, Cole, Hockley, TX 77447 (US); SEYFFERT, Kenneth, Wayne, Houston, TX 77018 (US); LARGENT, David, Wayne, Cleveland, TX 77327 (US); SCHULTE, David, Lee, Broussard, LA 70518 (US); WALKER, Jeffrey, Earl, Lafayette, LA 70508 (US); MURRAY, Hector, M., Aberdeen, AB12 5RG (GB); MCCLUNG, Guy, Lamont, Spring, TX 77379 (US)
(74) Representative: Lucas, Brian Ronald
(86) International application number: PCT/GB2000/000011
(87) International publication number: WO 2000/041822

(56) References cited:
- WO-A-94/15723
- WO-A-95/05248
- WO-A-97/03765
- WO-A-97/28906
- DE-U- 29 805 984
- US-A- 5 221 008
- US-A- 5 417 858

## Description

This invention relates to a screen assembly for use in a vibratory separator and to a method of making the same.

Screen assemblies are used for separating solids from liquids.

US-A-5 417 858 discloses a corrugated screen assembly which is supported on a punched plate containing a multiplicity of rectangular apertures in a staggered grid-like arrangement.

Applicant's PCT publication WO 97/03765 describes a screen assembly in which the corrugated screen is supported by a plurality of separate and distinct strips which extend substantially parallel to one another. This construction is significantly different from the grid-like arrangement of US-A-5 417 858 and has significant flow advantages relative thereto.

Applicant's PCT publication WO 97/28906 describes a screen assembly in which a corrugated screen is supported by a plurality of separate and distinct strips that have been punched or cut from a sheet of metal.

The present invention addresses *inter alia* the problem of constructing a screen assembly with a plurality of separate and distinct strips.

The present invention provides a solution to this problem.

According to the present invention there is provided a method of making a screen assembly for a vibratory separator, which method comprises the steps of
(a) cutting from a sheet of material a panel with two connected pairs of spaced-apart sides including a first pair of spaced-apart sides separated by a second pair of spaced-apart sides,
(b) forming a plurality of spaced-apart strips extending between the first pair of spaced-apart sides, each adjacent pair of the plurality of spaced-apart strips defining a space therebetween through the panel,
(c) bonding a first mesh to the spaced-apart strips, and
(d) bonding a second mesh to the first mesh;
characterized in that step (b) is carried out by removing elongated lengths of material from said sheet of material with a laser.

Preferably the strips are cut in width between about 0.10 inches (0.25cm) and about 3.00 inches (7.62cm).

Advantageously the strips are cut about 0.22 inches (0.56cm) wide.

Preferably, the strips are spaced-apart between about 0.2 inches (0.50cm) to about 4.00 inches (10.16cm).

Advantageously, the strips are about 1.3 inches (3.30cm) apart.

Preferably, the panel, sides and strips are made of 14 gauge (0.16 cm diameter) cold rolled steel.

Advantageously, the panel and its sides and strips are made of material from the group consisting of iron, steel, stainless steel, zinc, zinc alloy, aluminum, aluminum alloy, plastic, polytetrafluoroethylene, fibreglass and cermet.

Preferably, the first mesh is a backup mesh ranging between 2 mesh (0.8 strands per cm) and 30 mesh (12 strands per cm).

Advantageously, the second mesh is a fine mesh ranging between 14 mesh (5.5 strands per cm) and 500 mesh (196 strands per cm).

Preferably, the first mesh is 12 mesh (4.7 strands per cm) and the second mesh is 180 mesh (70 strands per cm).

Advantageously, the method further comprises a the step of including a third mesh on top of the second mesh.

Preferably, the third mesh ranges between 100 mesh (40 strands per cm) and 300 mesh (118 strands per cm).

Advantageously, the third mesh is bonded to the second mesh.

Preferably, the first mesh is made of wire of a first diameter and the second mesh is made of wire of a second diameter smaller than the first diameter and the third mesh is made of wire of a third diameter smaller than the second diameter.

Advantageously, the first mesh is made of wire of a first diameter and the second mesh is made of wire of a second diameter smaller than the first diameter.

Preferably, the strips are cut to have at least a portion that is curved as viewed from above.

The present invention also provides a screen assembly constructed in accordance with the present invention.

It is also within the scope of this invention to use a strip or strips which are disposed in a manner non-parallel to the two sides. In one aspect such non-parallel strips may extend diagonally from one end of one side of a panel, to a diagonally opposite end of the other side.

Any strip herein may have holes through it to facilitate fluid flow. In one aspect any panel comprising a combination of strips, or pattern of strips disclosed herein may be used with a generally flat ("two-dimensional") screen.

The present invention also provides a vibratory separator, for example a shale shaker, provided with a screen assembly in accordance with the present invention.

For a better understanding of the present invention reference will now be made, by way of example, to the accompanying drawings, in which:-
Fig. 1 is a top view of a panel for use in a screen assembly according to the present invention;
Fig. 2 is a front side view of the panel of Fig. 1. The back side view is like the view of Fig. 2;
Fig. 3 is a left end view (as in Fig. 1) of the panel of Fig. 1. The right end view is like the view of Fig. 3;
Fig. 4 is a bottom view of the panel of Fig. 1;
Fig. 5 is a top plan view of a first embodiment of a screen assembly in accordance with the present invention;
Fig. 6 is an exploded view of the screen assembly of Fig. 5;
Figs. 7 - 16 are top views of alternate panels;
Fig. 17 is a bottom view of a second embodiment of a screen assembly according to the present invention; and
Fig. 18 is a bottom view of another panel for a screen assembly according to the present invention.

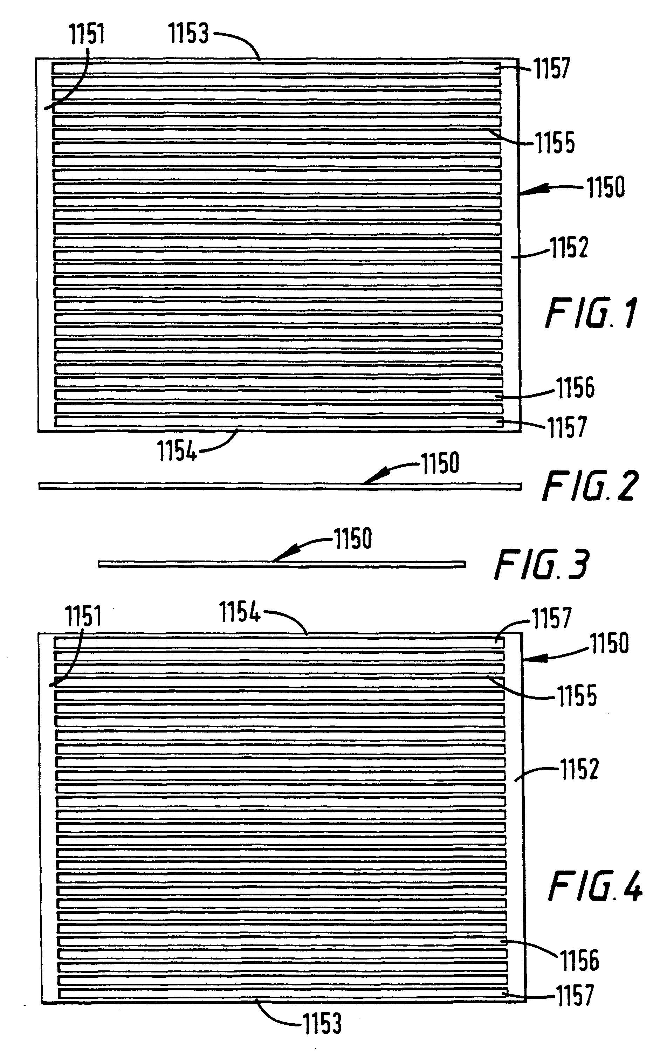

Figs. 1 - 4 show a panel 1150 with two opposed spaced-apart sides 1151 and 1152 spaced apart by two opposed sides 1153, 1154 and by a plurality of strips 1155. Each pair of spaced-apart strips, with portions of the sides 1151, 1152 define an open space 1156 through the panel 1150. At each side 1153, 1154, a strip 1155 and a portion of the side 1153 and side 1154 define an open space 1157 through the panel 1150.

In one aspect the panel 1150 (and/or strips and/or sides) is made of any suitable metal, e.g. but not limited to iron, steel, stainless steel, zinc, zinc alloys, aluminum, and aluminum alloys. In another aspect the panel is made of any suitable plastic, fiberglass, polytetrafluoroethylene cermet or composite. In one particular aspect the panel is made of 14 gauge (0.16 cm diameter) cold rolled steel about 0.074 inches (0.19cm) thick.

The openings in the panel are made by laser cutting. In one particular aspect a panel of 14 gauge cold rolled steel about 0.074 inches (0.19cm) thick is laser cut with a CO₂ laser producing very precise and well-defined open spaces and very precise and well-defined strips 1155, in one aspect with strips about 0.22 inches (0.56cm) wide, about 1.3 inches (3.3cm) apart from each other.

In other aspects, the strips 1155 may range in width between about 0.10 inches (0.25cm) to about 3.00 inches (7.6cm) and they may be spaced apart between about 0.2 inches (0.5cm) to about 4.00 inches (10.1cm). In one particular screen with about 0.22 inch (0.56cm) wide strips spaced about 1.3 inches (3.3cm) apart, the panel is 14 gauge (0.16 cm diameter) cold rolled steel about 46.75 inches (119cm) long, about 35.86 inches (91cm) wide, about 0.074 inches (0.19cm) thick with end portions, as viewed from above, about 1.65 inches (4.2cm) wide between the screen ends" outer edge and the edge of an open space. Alternatively, the strips 1155 may be vertically oriented as viewed in Fig. 1 and the panel 1150 may be corrugated.

Alternatively, the outer edges of the panel 1150 may be provided and the strips, as separate pieces, connected thereto in any manner, shape, or design as described above herein.

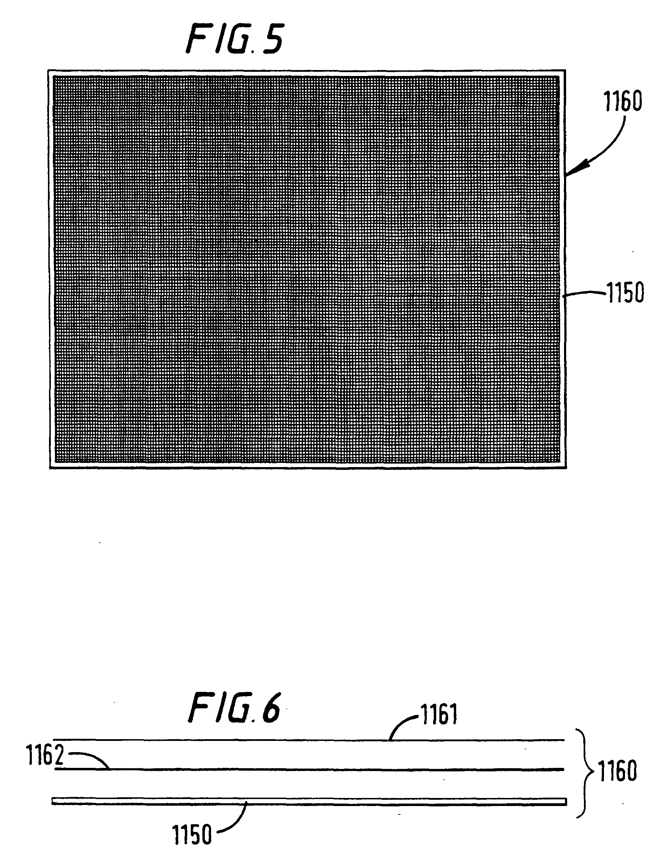

Fig. 5 shows a screen assembly 1160 according to the present invention with a panel 1150. A second mesh (in one aspect a fine mesh) 1161, e.g. 180 mesh (70 strands per cm), is bonded to a first mesh (in one aspect a backup mesh) 1162, e.g. 12 mesh (4.7 strands per cm) which is then bonded to the panel 1150. In additional embodiments, the second (fine) mesh 1161 may range between 14 mesh (5.5 strands per cm) and 500 mesh (196 strands per cm) and the first (backup) mesh 1162 may range between 2 mesh (0.8 strands per cm) and 30 mesh (12 strands per cm). Also, additional meshes may be used, including, but not limited to, any of the meshes and mesh combinations disclosed above herein, including the above-disclosed corrugated meshes in a flat configuration.

In other embodiments a first (backup) mesh, second (middle) mesh and a third (top) mesh (in one aspect ranging between 100 mesh (40 strands per cm) to 300 mesh (118 strands per cm)) are used. In one aspect the first (backup) mesh was 304 stainless steel 32 mesh (13 strands per cm) with wire diameter of 0.045 inches (0.11 cm), the second (middle) mesh was 130 mesh (51 strands per cm) 304 stainless steel with wire diameter of 0.0017 inches (0.004cm), and the third (top) mesh was 304 stainless steel 180 mesh with a wire diameter of 0.0012 inches (0.003cm). A panel like the panel 1150 was coated with a powder coating (e.g. such as commercially available TK NOVO B^{TM} Powder from Tuboscope Vetco) and bonded to the three meshes.

In other embodiments a first (backup) mesh and a second (top) mesh are used bonded together. In one aspect the first (backup) mesh was 304 stainless steel 8 mesh with wire diameter of 0.025 inches (0.063cm), and the second (top) mesh was 304 stainless steel 200 mesh (79 strands per cm) with a wire diameter of 0.0021 inches (0.005cm). A panel like the panel 1150 was coated with a powder coating and bonded to the two meshes.

In other embodiments a first (backup) mesh, second (middle) mesh and a third (top) mesh are used bonded together. In one aspect the top (backup) mesh was 304 stainless steel calendared 8 mesh (with tops of ridges flattened) with wire diameter of 0.025 inches (0.063cm), and the top mesh was 304 stainless steel 180 mesh with a wire diameter of 0.0012 inches (0.003cm) (or alternatively 200 mesh (79 strands per cm) with a wire diameter of 0.0010 inches (0.0025cm)). A panel like the panel 1150 was coated with a powder coating and bonded to the three meshes.

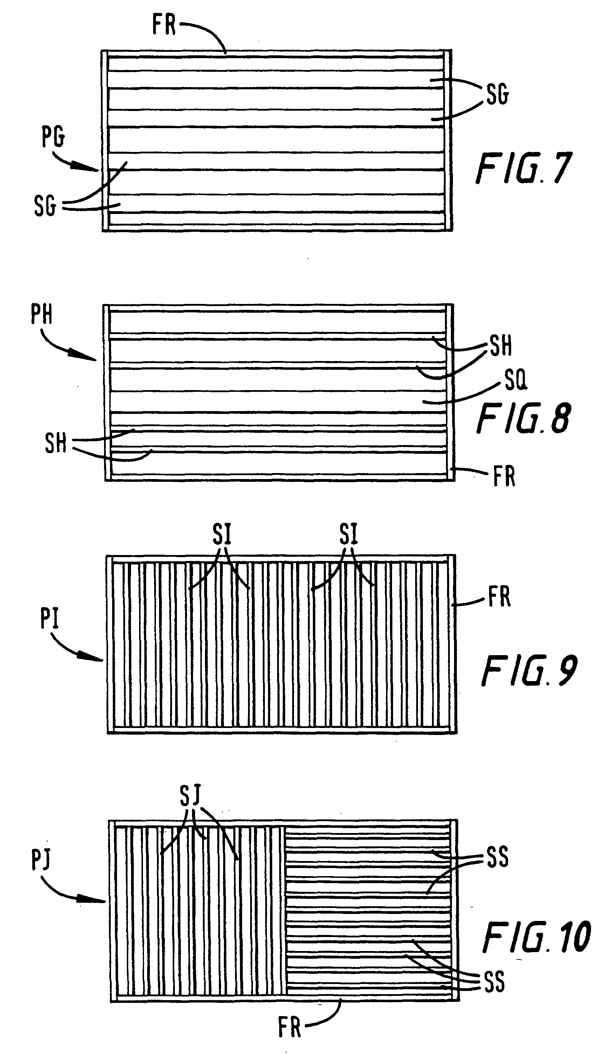

Figs. 7 - 16 are top views of alternate panels which have strips in various orientations and of various widths and spacing. Any panel, side, and/or strip depicted in these figures may be made of any material listed above for the panel 1150 and any strip in these figures may have the dimensions described for a strip 1155. Any mesh or meshes or mesh combination described herein may be used with any panel in Figs. 7-16 and these panels may be flat, corrugated, or undulating as any such shape for a frame or panel disclosed herein.

Fig. 7 shows a panel PG with strips SG.

Fig. 8 shows a panel PH with strips SH and one wider strip SQ. Fig. 9 shows a panel PI with vertically extending (as viewed in the figure) strips SI.

Fig. 10 shows a panel PJ with vertical strips SJ and horizontally extending (as viewed in the figure) strips SS.

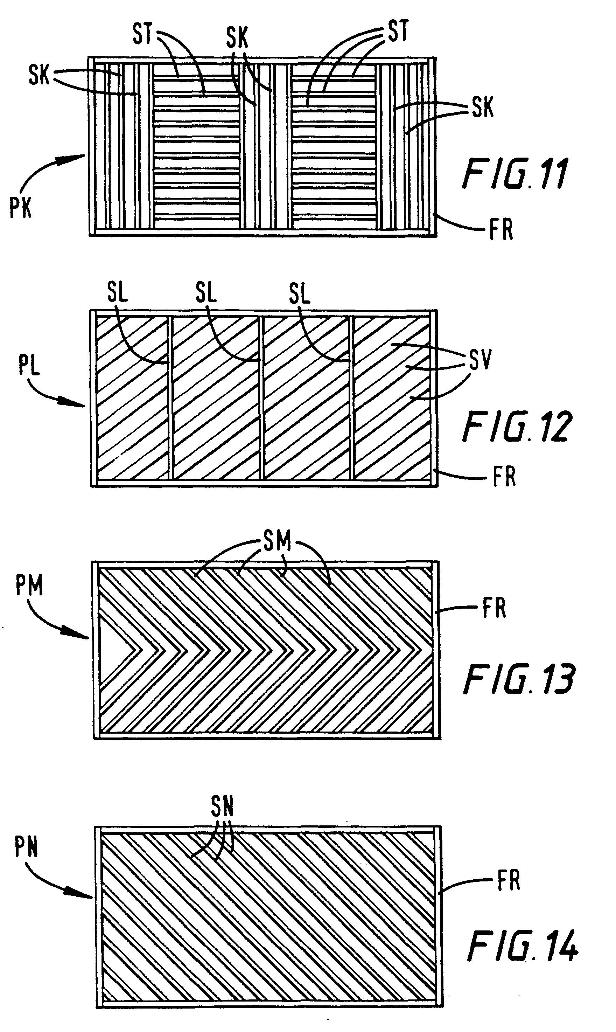

Fig. 11 shows a panel PK with vertical strips SK and horizontal strips ST.

Fig. 12 shows a panel PL with vertical strips SL and slanted (as viewed in the figure) strips SV.

Fig. 13 shows a panel PM with chevron shaped (as viewed in the figure) strips SM.

Fig. 14 shows a panel PN with slanted strips SN.

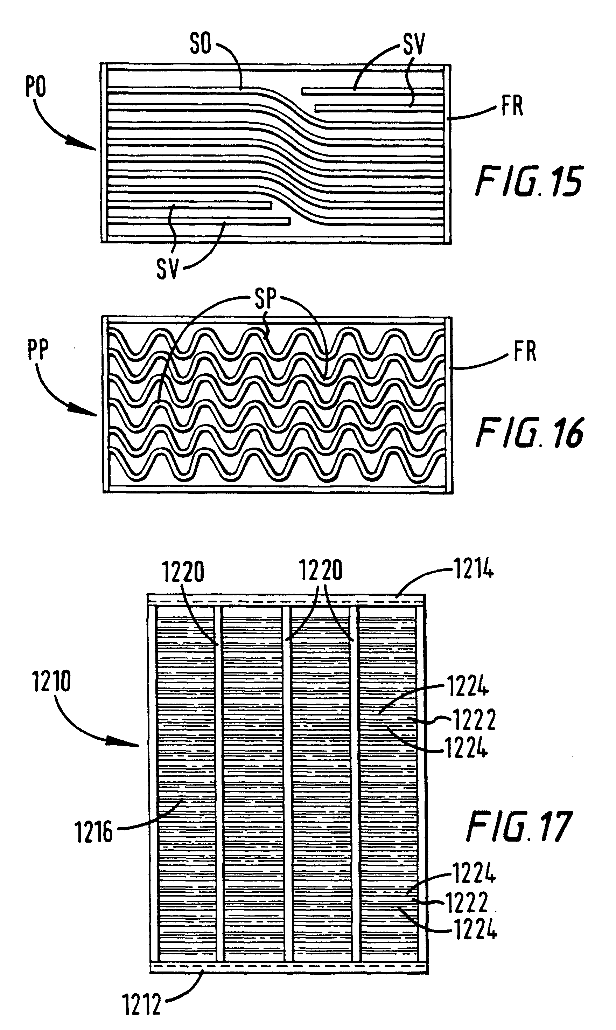

Fig. 15 shows a panel PO with partially curved strips SO and optional horizontal strips SV.

Fig. 16 shows a panel PP with undulating curved (as viewed from above) strips SP.

Each panel in Figs. 7 - 16 has an outer frame FR to which some or all of the strips or attached are formed with.

As in Figs. 10, 11, and 12, some of the strips are connected to other strips. Elongated lengths of material between strips are removed from the sheet of material from which the panel is formed with a laser.

Fig. 17 shows a screen 1210 according to the present invention with a frame with two sides 1212 and 1214 with strips 1220 extending between the two sides 1212 and 1214; and screen material 1216 on the strips 1220 and connected to the sides 1212 and 1214. Screen material 1216 (and any other screen or screening material disclosed herein) represents any known mesh, screen, or screens, used in any combination, bonded together or unbonded. The screen material 1216 as shown is "three-dimensional," i.e., not generally flat and has undulating portions with hills 1222 and valleys 1224. (It is within the scope of this invention for the screening material 1216 and any other screening material herein to be generally flat.)

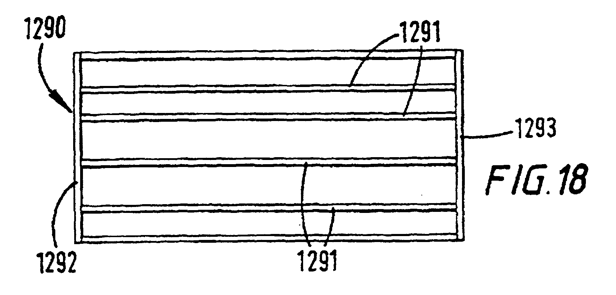

Fig. 18 shows a panel 1290. A plurality of strips 1291 extend between and are secured to frame sides 1292 and 1293.

In certain embodiments of a screen as in Fig. 18, the strips 1291 are between one-thirty second and one-eighth inches (0.08cm and 0.32cm) thick and about forty-five and a half inches (115cm) long; the frame sides 1292, 1293 are about thirty six inches (91cm) long; the strips 1291 are made from galvanized steel; and the frame sides 1292, 1293 are made from 20 gauge (0.1 cm thick) galvanized steel.

## Claims

1. A method of making a screen assembly for a vibratory separator, which method comprises the steps of:
(a) cutting from a sheet of material a panel (1150) with two connected pairs of spaced-apart sides including a first pair of spaced-apart sides (1151, 1152) separated by a second pair of spaced-apart sides (1153, 1154),
(b) forming a plurality of spaced-apart strips (1155) extending between the first pair of spaced-apart sides, each adjacent pair of the plurality of spaced-apart strips defining a space (1156, 1157) therebetween through the panel,
(c) bonding a first mesh (1162) to the spaced-apart strips, and
(d) bonding a second mesh (1161) to the first mesh;
**characterized in that** step (b) is carried out by removing elongated lengths of material from a sheet of material with a laser.

2. A method as claimed in Claim 1, wherein the strips are cut in width between about 0.10 inches (0.25cm) and about 3.00 inches (7.62cm).

3. A method as claimed in Claim 2, wherein the strips are cut about 0.22 inches (0.56cm) wide.

4. A method as claimed in any preceding Claim, wherein the strips are spaced-apart between about 0.2 inches (0.50cm) to about 4.00 inches (10.16cm).

5. A method as claimed in Claim 4, wherein the strips are about 1.3 inches (3.30cm) apart.

6. A method as claimed in any preceding Claim, wherein the panel, sides and strips are made of 14 gauge (0.16 cm diameter) cold rolled steel.

7. A method as claimed in any of claims 1 to 5, wherein the panel and its sides and strips are made of material from the group consisting of iron, steel, stainless steel, zinc, zinc alloy, aluminum, aluminum alloy, plastic, polytetrafluoroethylene, fibreglass and cermet.

8. A method as claimed in any preceding claim, wherein the first mesh is a backup mesh ranging between 2 mesh (0.8 strands per cm) and 30 mesh (12 strands per cm).

9. A method as claimed in any preceding claim, wherein the second mesh is a fine mesh ranging between 14 mesh (5.5 strands per cm) and 500 mesh (196 strands per cm).

10. A method as claimed in claim 8 and 9, wherein the first mesh is 12 mesh (4.7 strands per cm) and the second mesh is 180 mesh (70 strands per cm).

11. A method as claimed in any preceding claim, further comprising a third mesh on top of the second mesh.

12. A method as claimed in claim 11, wherein the third mesh ranges between 100 mesh (40 strands per cm) and 300 mesh (118 strands per cm).

13. A method as claimed in Claim 12, wherein the third mesh is bonded to the second mesh.

14. A method as claimed in Claim 11, 12 or 13, wherein the first mesh is made of wire of a first diameter and the second mesh is made of wire of a second diameter smaller than the first diameter and the third mesh is made of wire of a third diameter smaller than the second diameter.

15. A method as claimed in any preceding claim, wherein the first mesh is made of wire of a first diameter and the second mesh is made of wire of a second diameter smaller than the first diameter.

16. A method as claimed in any preceding Claim, wherein the strips are cut to have at least a portion that is curved as viewed from above.

17. A screen assembly constructed in accordance with a method as claimed in any preceding Claim.

18. A vibratory separator comprising a screen assembly as claimed in Claim 17.

## Patentansprüche

1. Verfahren zum Herstellen einer Siebanordnung für ein Schwingtrennsieb, wobei das Verfahren die Schritte aufweist:
a) Schneiden eines Blattes (1150) mit zwei verbundenen Paaren von in Abstand gelegenen Seiten aus einer Materialbahn, mit einem ersten Paar von in Abstand gelegenen Seiten (1151, 1152), die durch ein zweites Paar von in Abstand gelegenen Seiten (1153, 1154) getrennt sind,
b) Ausbilden einer Vielzahl von in Abstand gelegenen Streifen (1155), die sich zwischen dem ersten Paar von in Abstand gelegenen Seiten erstrecken, wobei jedes nachbarte Paar der Vielzahl von in Abstand gelegenen Streifen einen dazwischen liegenden Raum (1156, 1157) durch das Blatt hindurch begrenzt,
c) Verbinden eines ersten Netzes (1162) mit den in Abstand gelegenen Streifen und
d) Verbinden eines zweiten Netzes (1161) mit dem ersten Netz,
**dadurch gekennzeichnet, dass** der Schritt (b) ausgeführt wird, indem längliche Materialabschnitte aus einer Materialbahn mit einem Laser entfernt werden.

2. Verfahren nach Anspruch 1, wobei die Streifen in Breiten zwischen ungefähr 0.10 Zoll (0,25 cm) und ungefähr 3.00 Zoll (7,62 cm) geschnitten werden.

3. Verfahren nach Anspruch 2, wobei die Streifen ungefähr 0.22 Zoll (0,56 cm) breit geschnitten werden.

4. Verfahren nach einem der vorhergehenden Ansprüche, wobei die Streifen in Abständen zwischen ungefähr 0.2 Zoll (0,50 cm) und ungefähr 4.00 Zoll (10,16 cm) voneinander gelegen sind.

5. Verfahren nach Anspruch 4, wobei die Streifen voneinander einen Abstand von ungefähr 1.3 Zoll (3,30 cm) haben.

6. Verfahren nach einem der vorhergehenden Ansprüche, wobei das Blatt, die Seiten und Streifen aus einem kalt gewalzten Stahl mit 14er-Dicke (0,16 cm Dicke) gemacht sind.

7. Verfahren nach einem der Ansprüche 1 bis 5, wobei das Blatt und seine Seiten und Streifen aus einem Material aus der Gruppe bestehend aus Eisen, Stahl, rostfreiem Stahl, Zink, Zinklegierungen, Aluminium, Aluminiumlegierungen, Plastik, Polytetrafluoräthylen, Glasfasern und Metall-Keramiken hergestellt sind.

8. Verfahren nach einem der vorhergehenden Ansprüche, wobei das erste Netz ein Stütznetz mit einer Siebweite zwischen 2 (0,8 Stränge pro cm) und 30 (12 Stränge pro cm) ist.

9. Verfahren nach einem der vorhergehenden Ansprüche, wobei das zweite Netz ein feines Netz mit Siebweiten zwischen 14 (5,5 Stränge pro cm) und 500 (196 Stränge pro cm) ist.

10. Verfahren nach Anspruch 8 oder 9, wobei das erste Netz eine Siebweite von 12 (4,7 Stränge pro cm) und das zweite Netz eine Siebweite von 180 (70 Stränge pro cm) aufweist.

11. Verfahren nach einem der vorhergehenden Ansprüche, wobei ferner ein drittes Netz auf dem zweiten Netz vorgesehen ist.

12. Verfahren nach Anspruch 11, wobei das dritte Netz eine Siebweite zwischen 100 (40 Stränge pro cm) und 300 (180 Stränge pro cm) aufweist.

13. Verfahren nach Anspruch 12, wobei das dritte Netz mit dem zweiten Netz verbunden ist.

14. Verfahren nach Anspruch 11, 12 oder 13, wobei das erste Netz aus einem Draht mit einem ersten Durchmesser, das zweite Netz aus einem Draht mit einem zweiten Durchmesser kleiner als der erste Durchmesser und das dritte Netz aus Draht mit einem dritten Durchmesser kleiner als der zweite Durchmesser hergestellt wird.

15. Verfahren nach einem der vorhergehenden Ansprüche, wobei das erste Netz aus einem ersten Draht mit einem ersten Durchmesser und das zweite Netz aus einem Draht mit einem zweiten Durchmesser kleiner als der erste Durchmesser hergestellt wird.

16. Verfahren nach einem der vorhergehenden Ansprüche, wobei die Streifen so geschnitten werden, dass sie zumindest einen Bereich aufweisen, der von oben gesehen gekrümmt verläuft.

17. Siebanordnung, die mit einem Verfahren nach einem der vorhergehenden Ansprüche hergestellt ist.

18. Schwingseparator mit einer Siebanordnung nach Anspruch 17.

## Revendications

1. Procédé de fabrication d'un ensemble de crible destiné à un séparateur vibrant, procédé qui comprend les étapes consistant à :
(a) découper à partir d'une tôle de matériau un panneau (1150) comportant deux paires reliées de côtés espacés incluant une première paire de côtés espacés (1151, 1152) séparés par une seconde paire de côtés espacés (1153, 1154),
(b) former une pluralité de bandes espacées (1155) s'étendant entre la première paire de côtés espacés, chaque paire adjacente de la pluralité de bandes espacées définissant entre elles un espace (1156, 1157) à travers le panneau,
(c) lier une première maille (1162) aux bandes espacées, et
(d) lier une seconde maille (1161) à la première maille ;
**caractérisé en ce que** l'étape (b) est réalisée en retirant avec un laser les bandes de matériau de forme allongée d'une tôle de matériau.

2. Procédé selon la revendication 1, dans lequel les bandes sont découpées en largeur entre 0,25 cm ( 0,01 pouce) environ et 7,62 cm (3,00 pouces) environ.

3. Procédé selon la revendication 2, dans lequel les bandes sont découpées à une largeur approximative de 0,56 cm (0,22 pouce).

4. Procédé selon l'une quelconque des revendications précédentes, dans lequel les bandes présentent un écartement de 0,50 cm (0,2 pouce) environ à 10,16 cm (4,00 pouces) environ.

5. Procédé selon la revendication 4 dans lequel les bandes présentent un écartement de 3,30 cm (1,3 pouce) environ.

6. Procédé selon l'une quelconque des revendications précédentes, dans lequel le panneau, les côtés et les bandes sont constitués d'acier laminé à froid de calibre 14 (diamètre 0,16 cm).

7. Procédé selon l'une quelconque des revendications 1 à 5, dans lequel le panneau et ses côtés et ses bandes sont constitués de matériau provenant du groupe constitué de fer, d'acier, d'acier inoxydable, de zinc, d'alliage de zinc, d'aluminium, d'alliage d'aluminium, de matière plastique, de polytétrafluoroéthylène, de fibre de verre et de cermet.

8. Procédé selon l'une quelconque des revendications précédentes, dans lequel la première maille est une maille se situant entre 2 mesh (0,8 brin par cm) et 30 mesh (12 brins par cm).

9. Procédé selon l'une quelconque des revendications précédentes dans lequel la seconde maille est une maille fine se situant entre 14 mesh (5,5 brins par cm) et 500 mesh (196 brins par cm).

10. Procédé selon la revendication 8 et la revendication 9, dans lequel la première maille est de 12 mesh (4,5 brins par cm) et la seconde maille est de 180 mesh (70 brins par cm).

11. Procédé selon l'une quelconque des revendications précédentes comprenant, de plus, une troisième maille au-dessus de la seconde maille.

12. Procédé selon la revendication 11 dans lequel la troisième maille se situe dans la plage comprise entre 100 mesh (40 brins par cm) et 300 mesh (118 brins par cm).

13. Procédé selon la revendication 12 dans lequel la troisième maille est reliée à la seconde maille.

14. Procédé selon la revendication 11, 12 ou 13 dans lequel la première maille est constituée de fil d'un premier diamètre et la seconde maille est constituée de fil d'un second diamètre plus petit que le premier diamètre et la troisième maille est faite de fil d'un troisième diamètre plus petit que le second diamètre.

15. Procédé selon l'une quelconque des revendications précédentes dans lequel la première maille est faite de fil d'un premier diamètre et la seconde maille est faite de fil d'un second diamètre plus petit que le premier diamètre.

16. Procédé selon l'une quelconque des revendications précédentes, dans lequel les bandes sont découpées pour présenter une partie au moins qui est courbée telles vues de dessus.

17. Ensemble de crible fabriqué selon le procédé tel que revendiqué dans l'une quelconque des revendications précédentes.

18. Séparateur vibrant comportant un ensemble de crible tel que revendiqué dans la revendication 17.
